# EUROPEAN PATENT APPLICATION

(11) **EP 4 467 603 A1**
(43) Date of publication of application: **27.11.2024**
(21) Application number: 22922081.9
(22) Date of filing: 28.11.2022
(51) Int. Cl.: C08L 21/00, C08K 5/00, C08L 23/16, G02B 5/22

(54) **RUBBER COMPOSITION**

(30) Priority: 21.01.2022 JP 2022007659
(71) Applicant: NOK Corporation, Tokyo 105-8585 (JP)
(72) Inventor: WATANABE, Isao, Fujisawa-shi, Kanagawa 251-0042 (JP)
(74) Representative: Global IP Europe Patentanwaltskanzlei
(86) International application number: PCT/JP2022/043744
(87) International publication number: WO 2023/139930

(57) **Abstract**

There is provided a rubber composition capable of obtaining a rubber material that absorbs visible light that interferes with sensors and the like in a wide range and selectively transmits infrared light.

The rubber composition includes (A) a polymer, (B) a crosslinking agent, and (C) a colorant, wherein the colorant (C) does not contain an inorganic black pigment, and a minimum transmittance in a wavelength of 800 to 1600nm is 50% or more and a maximum transmittance in a wavelength of 350 to 700nm is 40% or less in a rubber sheet having a thickness of 2mm.

## Description

### Technical Field

The present invention relates to a rubber composition.

### Description of the Related Art

Near-infrared ray are widely used for on-vehicle sensors, biometric authentication sensors, biological applications, and the like, and the use thereof is expected to be further expanded in the future. In various sensors using the above-described near-infrared rays, resins that selectively absorb light of a specified wavelength are widely used (see, for example, Patent Documents 1 to 8).

For example, a selected wavelength absorption resin composition for LiDAR that detects a distance or an azimuth to an object is disclosed in Patent Document 1. The "LiDAR" is an abbreviation of Light Detection and Ranging, and is a technique for measuring a distance and an angle to an object by irradiating the object with laser light while scanning and observing the reflected light.

The selected wavelength absorption resin composition for LiDAR disclosed in Patent Document 1 contains an epoxy resin as a main component, and a cured body of the resin composition formed to have a thickness of 1mm has an average light transmittance of 40% or less within a wavelength range of 380nm to 700nm, and a transmittance in a wavelength of 80% or more in the wavelength (850nm to 950nm, 1500nm to 1600nm) of a laser beam used in the LiDAR.

Patent Documents 2 and 3 disclose resins containing polycarbonate as wavelength-selective transmissive resins for LiDAR. For example, Patent Document 2 discloses a polycarbonate resin composition having wavelength-selective transmissivity, and Patent Document 3 discloses a thermoplastic resin containing a polycarbonate resin. Patent Documents 2 and 3 propose a technique for defining the type of wavelength-absorbing dye for the resin containing polycarbonate described above.

Patent Document 4 discloses a thermoplastic resin composition containing a thermoplastic resin and a coloring material. In the thermoplastic resin composition disclosed in Patent Document 4, when the thickness of the resin composition is 1mm, the maximum transmittance in a wavelength of 380 to 630nm is 1% or less, and the average transmittance of 840 to 940nm is 80% or more. Patent Document 4 also discloses a technique for defining a pigment or the like to be used as a coloring material, and that the thermoplastic resin composition is used for an optical lens, an infrared camera lens, a lens for a biometric authentication camera, and the like.

Patent Document 5 discloses an optical film capable of absorbing a specific wavelength by a plurality of filters. The optical film disclosed in Patent Document 5 includes a near-infrared blocking layer having an absorption maximum in a wavelength of 600 to 800nm, and is used for a biometric authentication device and an imaging device.

Patent Document 6 discloses an optical filter containing a green dye and a black dye. The optical filter disclosed in Patent Document 6 includes a structure having an average transmittance of 400 to 730nm of 2% or less and having a contituous wavelength range of 50nm where the average transmittance is 80% or more within 800 to 1000nm. In the optical filter disclosed in Patent Document 6, the green dye and the black dye are present in a state of being dispersed or dissolved in a transparent resin. The optical filter disclosed in Patent Document 6 is used for an imaging device, an infrared sensor, a biometric authentication device, and a three-dimensional distance image camera.

Further, Patent Documents 7 and 8 propose a visible light-shielding silicone rubber composition using silicone rubber and an infrared transmitting composition.

### Citation List

### Patent Document

[Patent Document 1] JP-B-6899061
[Patent Document 2] JP-A-2021-147470
[Patent Document 3] International Publication WO 2021/025097
[Patent Document 4] International Publication WO 2020/138050
[Patent Document 5] JP-A-2020-177147
[Patent Document 6] JP-B-6662299
[Patent Document 7] JP-B-5170463
[Patent Document 8] JP-A-2021-70772

### SUMMARY OF THE INVENTION

### Problem to be Solved by the Invention

In the resin compositions that selectively absorb light of a specific wavelength disclosed in Patent Documents 1 to 6, since a resin is used as a main component, the cured body (resin) is hard and has poor flexibility. For this reason, the resin compositions disclosed in Patent Documents 1 to 6 have problems in that the cured body is likely to be cracked and in that the followability to deformation is low.

In addition, the rubber compositions disclosed in Patent Documents 7 and 8 have a problem of poor selectivity of light having a required wavelength. That is, since the rubber, which is a cured body of rubber compositions, generally has low transparency, carbon black or the like is added to the rubber composition, for example. In the rubber composed of such a rubber composition, it is usually difficult for a colorant such as carbon black to absorb light in a wide range from visible light to infrared light to obtain transmissivity of infrared light. On the other hand, transparent rubber is also generally present, but such transparent rubber transmits a wide range of light from ultraviolet to visible light to infrared light, and it is difficult to selectively transmit light having a necessary wavelength.

Currently, for example, a silicone semiconductor laser having a wavelength of 905nm is used for a sensor or the like using light of a specific wavelength. Such a silicone semiconductor laser has an advantage of being inexpensive and low in power consumption. However, since the laser light is close to visible light and affects the retina, the output of the laser cannot be increased, and the laser light is greatly affected by sunlight. In recent years, the use of indium gallium arsenic phosphorus (InGaAsP) semiconductor laser of wavelength of 1550nm has also been studied as a second-generation mechaless technique. Although InGaAsP semiconductor laser has high cost and power consumption, it has the advantage of having less effect on the retina, higher output, and being less affected by sunlight.

In the rubber compositions disclosed in the above-described Patent Documents 7 and 8, the defined infrared transmission range is 800nm or 800 to 900nm, and in order to provide versatility to the above-described various lasers, there is an increasing demand for a wider range of infrared transmissivity.

The present invention has been made in view of the problems of the prior art. The present invention provides a rubber composition capable of obtaining a rubber material that absorbs visible light, which is an obstacle to sensor and the like, in a wide range and selectively transmits infrared light.

### Means for Solving the Problems

According to the present invention, the rubber composition shown below is provided.
[1] A rubber composition comprising (A) a polymer, (B) a crosslinking agent, and (C) a colorant, wherein the colorant (C) does not contain an inorganic black pigment, and a minimum transmittance in a wavelength of 800 to 1600nm is 50% or more and a maximum transmittance in a wavelength of 350 to 700nm is 40% or less in a rubber sheet having a thickness of 2mm.
[2] The rubber composition according to [1], which contains two or more kinds of organic colorants for shielding visible light as the colorant (C).
[3] The rubber composition according to [1] or [2], wherein the colorant (C) is 1 part by mass or less with respect to 100 parts by mass of the polymer (A).
[4] The rubber composition according to any one of [1] to [3], which contains an organic peroxide as the crosslinking agent (B).
[5] The rubber composition according to any one of [1] to [4], wherein the polymer (A) includes at least one of a fluororubber and an ethylene propylene diene rubber.
[6] The rubber composition according to any one of [1] to [5], wherein a minimum transmittance in a wavelength of 800 to 1600nm in a rubber sheet having a thickness of 2mm is 60% or more.
[7] The rubber composition according to any one of [1] to [6], wherein a minimum transmittance in a wavelength of 900 to 1600nm in a rubber sheet having a thickness of 2mm is 50% or more.
[8] The rubber composition according to any one of [1] to [7], which is used for a product using infrared light having a wavelength of 800 to 1600nm.
[9] The rubber composition according to any one of [1] to [7], which is used for selective wavelength-absorption for LiDAR and a cover thereof.
[10] The rubber composition according to any one of [1] to [7], which is used for an optical lens, an infrared camera lens, a lens for a biometric authentication camera, and covers thereof.
[11] The rubber composition according to any one of [1] to [7], which is used for a biometric authentication device and a cover thereof.
[12] The rubber composition according to any one of [1] to [7], which is used for an imaging device and a cover thereof.
[13] The rubber composition according to any one of [1] to [7], which is used for a three-dimensional distance image camera and a cover thereof.

According to the rubber composition of the present invention, it is possible to obtain a rubber material that absorbs visible light, which is an obstacle to sensor and the like, in a wide range and selectively transmits infrared light. In particular, the rubber composition does not contain an inorganic black pigment such as carbon black, which is widely used for reinforcing rubber or the like, and thus is excellent in transmissivity to infrared light. Further, compared with the resin material, the rubber composition is excellent in flexibility, can be applied to a product with deformation, and contributes to an improvement in the design freedom of the entire apparatus using the rubber material. Further, compared with the resin material, the impact absorbing property is improved, and the occurrence of breakage such as cracking can be extremely effectively prevented.

### Mode for Carrying out the Invention

Hereinafter, embodiments of the present invention will be described, but the present invention is not limited to the following embodiments. Therefore, it should be understood that the scope of the present invention includes modifications, improvements, and the like appropriately made to the following embodiments based on ordinary knowledge of a person skilled in the art without departing from the spirit of the present invention.

### [Rubber Composition]

One embodiment of the rubber composition is a rubber composition comprising (A) a polymer, (B) a crosslinking agent, and (C) a colorant, wherein the colorant (C) does not contain an inorganic black pigment. In the rubber composition of the present embodiment, a minimum transmittance in a wavelength of 800 to 1600nm is 50% or more and a maximum transmittance in a wavelength of 350 to 700nm is 40% or less in a rubber sheet having a thickness of 2mm. The rubber composition of the present embodiment can obtain a rubber material that absorbs visible light, which is an obstacle to sensor and the like, in a wide range and selectively transmits infrared light. In particular, the rubber composition of the present embodiment does not contain an inorganic black pigment, and thus is excellent in transmissivity to infrared rays. Further, compared with the resin material, the rubber composition is excellent in flexibility, can be applied to a product with deformation, and contributes to an improvement in the design freedom of the entire apparatus using the rubber material. Further, compared with the resin material, the impact absorbing property is improved, and the occurrence of breakage such as cracking can be effectively prevented.

Here, the inorganic black pigment is a pigment made of an inorganic compound, and means a pigment having a black to dark brown color when a rubber material is formed by using the pigment as a coloring material. For example, the inorganic black pigment may include inorganic oxides such as titanium black and triiron tetraoxide (iron black) or known inorganic pigments such as carbon black. The rubber composition of the present embodiment does not substantially contain such an inorganic black pigment. In the rubber composition of the present embodiment, "the colorant (C) does not contain an inorganic black pigment" means that each component constituting the rubber composition does not substantially contain an inorganic black pigment. That is, "the colorant (C) does not contain an inorganic black pigment" means that the component other than the colorant (C) does not substantially contain an inorganic black pigment. In addition, the term "does not substantially contain" an inorganic black pigment means that the inorganic black pigment is not actively (in other words, intentionally) blended except when the inorganic black pigment is inevitably mixed. Therefore, the rubber composition of the present embodiment may contain an extremely small amount of a black inorganic compound as an inevitable impurity. The upper limit of the allowable concentration of the inevitable impurity varies depending on various conditions, and for example, it is preferably less than or equal to an amount that does not substantially affect the minimum transmittance in a wavelength of 800 to 1600nm and the maximum transmittance in a wavelength of 350 to 700nm in a rubber sheet having a thickness of 2mm. For example, the amount of the inorganic black pigment as an inevitable impurity is preferably 0.001 parts by mass or less (i.e., 10ppm or less) with respect to 100 parts by mass of the polymer (A).

As described above, in the rubber composition of the present embodiment, the minimum transmittance in a wavelength of 800 to 1600nm is 50% or more and the maximum transmittance in a wavelength of 350 to 700nm is 40% or less in a rubber sheet having a thickness of 2mm. The transmittance in each wavelength range can be measured using, for example, an ultraviolet-visible near-infrared spectrophotometer. As such a spectrophotometer, for example, UV-Visible/NIR Spectrophotometer (UH4150 (trade name)) manufactured by Hitachi High-Tech Science Corporation can be used. The transmittance in a range of the wavelength of 800 to 1600nm is measured by a spectrophotometer for each 1nm in the range, and the minimum value (the lowest value) of the measured transmittance is defined as the "minimum transmittance". The transmittance in a range of the wavelength of 350 to 700nm is measured by a spectrophotometer for each 1nm in the range, and the maximum value (the highest value) of the measured transmittance is defined as the "maximum transmittance".

When the minimum transmittance in a wavelength of 800 to 1600nm is 50% or more in a rubber sheet having a thickness of 2mm, the transmissivity to infrared rays is excellent. In addition, when the maximum transmittance in a wavelength of 350 to 700nm is 40% or less in a rubber sheet having a thickness of 2mm, it is possible to effectively prevent the transmission of visible light, which is an obstacle to sensor or the like.

In the rubber composition of the present embodiment, for example, a minimum transmittance in a wavelength of 800 to 1600nm is preferably 60% or more in a rubber sheet having a thickness of 2mm. With such a configuration, it becomes extremely excellent in transmissivity to infrared light. In the rubber composition of the present embodiment, for example, a minimum transmittance in a wavelength of 900 to 1600nm is preferably 50% or more in a rubber sheet having a thickness of 2mm. With such a configuration, it becomes more excellent in transmissivity to infrared light of a specific wavelength.

An upper limit of the minimum transmittance in a wavelength of 800 to 1600nm in a rubber sheet having a thickness of 2mm is not particularly limited. For example, the upper limit of the minimum transmittance may be 100%, 90%, or 80%. There is also no particular limitation on a lower limit of the maximum transmittance in a wavelength of 350 to 700nm in a rubber sheet having a thickness of 2mm. For example, the lower limit of the maximum transmittance may be 0%.

A method for manufacturing a rubber sheet having a thickness of 2mm is not particularly limited, but for example, the rubber sheet can be manufactured by the following method. First, a rubber composition for manufacturing the rubber sheet, for example, the rubber composition of the present embodiment described above, is prepared. As for the rubber composition used for manufacturing the rubber sheet, for example, it is preferable that the rubber composition is kneaded in an open roll and kneaded until the contained components become uniform, and the rubber composition is cut into a sheet form to obtain a rubber base material. Next, the prepared rubber composition is placed in a mold having a depth of 1.9 to 2.0mm. When the rubber composition is placed in a mold, the amount of the rubber composition is adjusted so that the thickness of the rubber sheet obtained by vulcanization becomes 2mm. For example, the method for manufacturing the rubber sheet can be referred to the "Rubber test mixes-Preparation, mixing and vulcanization-Equipment and procedures" in JIS K6299:2012. Next, the rubber composition contained in the mold is subjected to press vulcanization. For the vulcanization conditions (temperature, time), the vulcanization rate (t90) of the rubber composition to be vulcanized is separately measured, and vulcanization is performed at t90 or more time (minutes). The vulcanization rate (t90) is the time (minutes) from the beginning of the measurement until the torque reaches 90% of the (MH-ML) when the maximum value of the torque is MH and the minimum value is ML in the vulcanization behavior measurement test of the unvulcanized rubber composition by the rheometer. When press vulcanization is performed, vulcanization is immediately terminated when t90 is exceeded. In this way, a rubber sheet having a thickness of 2mm is manufactured. When manufacturing the rubber sheet, take care not to touch the surface of the rubber sheet as the sample as much as possible so that foreign matter or other components do not adhere to the surface.

The rubber composition of the present embodiment includes (A) a polymer, (B) a crosslinking agent, and (C) a colorant. For example, the components included in the rubber composition are not limited to the above-described components, and any rubber composition may be used as long as it does not contain an inorganic black pigment and is prepared so that the minimum transmittance in a wavelength of 800 to 1600nm is 50% or more and the maximum transmittance in a wavelength of 350 to 700nm is 40% or less in a rubber sheet having a 2mm thickness. Hereinafter, the polymer (A) may be referred to as a component (A), the crosslinking agent (B) may be referred to as a component (B), and the colorant (C) may be referred to as a component (C).

As the polymer as a component (A), various known rubber polymers can be used. Examples of the general-purpose rubber include, but are not limited to, a natural rubber (NR), a butadiene rubber (BR), an isoprene rubber (IR), and a styrene-butadiene rubber (SBR). Examples of the special rubber include an acrylic rubber (ACM), an ethylene acrylate rubber (AEM), an ethylene propylene rubber (EPM), an ethylene propylene diene rubber (EPDM), a fluororubber (FKM), an epichlorohydrin rubber (ECO), a hydrogenated nitrile rubber (HNBR), a butyl rubber (IIR), an isoprene rubber (IR), an acrylonitrile butadiene rubber (NBR), a silicone rubber (a vinyl methyl silicone rubber (VMQ)), and an urethane rubber (U). By using such a polymer, it is possible to solve the problems of conventional resins, such as hardness and poor flexibility, and it is possible to suitably apply to the products with deformation.

As the polymer as a component (A), for example, a fluororubber (FKM) or an ethylene propylene diene rubber (EPDM) can be more preferably used because the transparency of the rubber can be further increased by using a peroxide crosslinking agent. Further, the fluororubber (FKM) and the ethylene propylene diene rubber (EPDM) have higher mechanical strength than, for example, a silicone rubber (VMQ) and have higher resistance to strong acids, strong alkalis, silicone oils, chlorine water, and the like.

As the crosslinking agent as a component (B), a crosslinking agent used in a known rubber composition, for example, a vulcanizing agent, a vulcanization aid, a vulcanization accelerator, or the like can be used. For example, a peroxide-based crosslinking agent, a polyol-based crosslinking agent, or the like can be selected as the crosslinking agent according to the purpose. Although not particularly limited, it is preferable to use an organic peroxide as the crosslinking agent in the rubber composition of the present embodiment.

The blending amount of the crosslinking agent is not particularly limited, and can be appropriately determined according to the type and the blending amount of the polymer as the component (A).

As the colorant as a component (C), a known colorant other than an inorganic black pigment can be used. In the rubber composition of the present embodiment, an organic colorant composed of an organic substance can be suitably used as the colorant. The color of the colorant is not particularly limited, and can be appropriately determined according to the use of the rubber composition and the like. However, since the colorant affects the transmittance of the rubber sheet, it is preferable to adjust the type and the blending amount of the colorant as appropriate in consideration of the transmittance in a wavelength of 800 to 1600nm and a wavelength of 350 to 700nm of a rubber sheet made of the rubber composition. For example, although not particularly limited, the amount of the colorant as the component (C) is preferably 1 part by mass or less with respect to 100 parts by mass of the polymer as the component (A).

The rubber composition of the present embodiment preferably contains two or more kinds of organic colorants for shielding visible light as a colorant. With such a configuration, in the rubber material made of the rubber composition, a rubber material that absorbs visible light, which is an obstacle to sensor and the like, in a wide range and selectively transmits infrared light can be effectively obtained. Even when two or more kinds of organic colorants are contained, the amount of the colorant of the component (C) is preferably 1 part by mass or less with respect to 100 parts by mass of the polymer of the component (A).

Examples of the organic colorant as the colorant include organic pigments. Examples of the red pigment include diketopyrrolopyrrole-based, anthraquinone-based, and perylene-based red pigments. Examples of the yellow pigment include isoindoline-based and anthraquinone-based yellow pigments. Examples of the blue pigment include copper phthalocyanine-based and anthraquinone-based blue pigments. Examples of the green pigment include phthalocyanine-based and isoindoline-based green pigments.

The rubber composition of the present embodiment may contain other additives, but various additives need to be blended so that the minimum transmittance in a wavelength of 800 to 1600nm and the maximum transmittance in a wavelength of 350 to 700nm in the rubber sheet having a thickness of 2mm fall within the numerical values described above. Other additives include, for example, processing aids, waxes, plasticizer, and the like. In addition, a filler such as a nanofiller may be included within a range that does not impair the transmissivity of the obtained rubber material. The rubber composition of the present embodiment may be, for example, free of other additives in view of the effect on transmissivity of the resulting rubber material.

The rubber composition of the present embodiment can be used as a product obtained by vulcanizing and molding the rubber composition. For example, the rubber composition can be used as a rubber product obtained by primary vulcanization of the rubber composition or a rubber product obtained by further performing secondary vulcanization according to characteristics of the rubber composition. For example, the rubber composition of the present embodiment can be suitably used in a product using infrared light having a wavelength of 800 to 1600nm. For example, although not particularly limited, the rubber composition of the present embodiment can be suitably used for selective wavelength absorbance for LiDAR and a cover thereof, an optical lens, an infrared camera lens, a lens for a biometric camera, and a cover thereof, a biometric authentication device and a cover thereof, an imaging device and a cover thereof, and a three-dimensional distance imaging camera and a cover thereof.

### Examples

Hereinafter, the present invention will be described in more detail by examples, but the present invention is not limited by these examples in any way.

### (Examples 1 to 5, Comparative Examples 1 to 7)

### [Sample Preparation]

Each component was weighed and blended so as to have a blending ratio (parts by mass) shown in Table 1 below, and then kneaded with an open roll until the each component became uniform to prepare the rubber compositions of Examples 1 to 5 and Comparative Examples 1 to 7. Next, the obtained rubber composition was cut into a sheet to obtain a rubber material, and the obtained rubber material was placed in a form having a depth of 2mm. Next, the rubber composition (rubber material) contained in the form was subjected to press vulcanization at 170°C for 12 minutes. As described above, the rubber sheets having a thickness of 2mm made of the rubber compositions of Examples 1 to 5 and Comparative Examples 1 to 7 were respectively prepared. When making a rubber sheet, we took care not to touch a surface of the rubber sheet so that foreign matters and other components did not adhere to the surface.

### [Component (A): Polymer]

(A-1) Fluororubber, "TECNOFLON P757 (trade name)" manufactured by Solvay.
(A-2) Ethylene propylene diene rubber, "EPT 3045H (trade name)" manufactured by Mitsui Chemicals, Inc.
(A-3) Fluororubber, "Viton A500 (trade name)" manufactured by Chemours Company.
(A-4) Acrylonitrile butadiene rubber, "Nipol 3350 (trade name)" manufactured by ZEON Corporation.

### [Component (B): Crosslinking agent (vulcanizing agent, vulcanization aid)]

(B-1) "PERHEXA 25B (trade name)" manufactured by NOF Corporation.
(B-2) "TAIC WH60 (trade name)" manufactured by Mitsubishi Chemical Corporation.
(B-3) "PERCUMYL D (trade name)" manufactured by NOF Corporation.
(B-4) "Curative No.30 (trade name)" manufactured by Chemours Company.
(B-5) "Curative No.20 (trade name)" manufactured by Chemours Company.
(B-6) "CALDIC2000 (trade name)" manufactured by Ohmi Chemical Industry Co., Ltd.
(B-7) "Colloidal sulfur A" manufactured by Tsurumi Chemical Industry Co., Ltd.
(B-8) "Sanceler TT (trade name)" manufactured by Sanshin Chemical Industry Co., Ltd.
(B-9) "Sanceler CZ (trade name)" manufactured by Sanshin Chemical Industry Co., Ltd.
(B-10) "Zinc oxide (ZnO)" manufactured by Seido Chemical Industry Co., Ltd.
(B-1 1) "DTST (trade name) (Stearic acid)" manufactured by Miyoshi Oil & Fat Co., Ltd.

### [Component (C): Colorant (organic colorant/non-organic colorant)]

(C-1) "Phthalocyanine Blue" manufactured by Resino Color Industry Co., Ltd.
(C-2) "Pigment Orange 34" manufactured by Resino Color Industry Co., Ltd.
(C-3) "Pigment Yellow 55" manufactured by Resino Color Industry Co., Ltd.
(C-4) "THERMAX N990 LSR (trade name) (Carbon (MT grade))" manufactured by Cancarb Limited
(C-5) "Brown 601 (trade name) (Ferric oxide)" manufactured by Resino Color Industry Co., Ltd.

**[Table 1]**

| | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|---|
| Component(A) | Polymer | TECNOFLON P757 | 100 | 100 | 100 | 100 | - | 100 | 100 | 100 | 100 | - | 100 | - |
| | | EPT 3045H | - | - | - | - | 100 | - | - | - | - | - | - | - |
| | | Viton A500 | - | - | - | - | - | - | - | - | - | 100 | - | - |
| | | Nipol 3350 | - | - | - | - | - | - | - | - | - | - | - | 100 |
| | | PERHEXA 25B | 0.8 | 0.8 | 0.8 | 0.8 | - | 0.8 | - | - | - | - | 0.8 | - |
| | | TAIC WH60 | 2 | 2 | 2 | 2 | - | 2 | - | - | - | - | 2 | - |
| | | PERCUMYL D | - | - | - | - | 2 | - | - | - | - | - | - | - |
| | | Curative No.30 | - | - | - | - | - | - | - | - | - | 3 | - | - |
| Component(B) | Vulcanizing agent and Vulcanization aid | Curative No.20 | - | - | - | - | - | - | - | - | - | 1.5 | - | - |
| | | CALDIC2000 | - | - | - | - | - | - | - | - | - | 4 | - | - |
| | | Sulfur | - | - | - | - | - | - | - | - | - | - | - | 0.5 |
| | | TT | - | - | - | - | - | - | - | - | - | - | - | 1.5 |
| | | CZ | - | - | - | - | - | - | - | - | - | - | - | 1.5 |
| | | ZnO | - | - | - | - | - | - | - | - | - | - | - | 5 |
| | | Stearic acid | - | - | - | - | - | - | - | - | - | - | - | 1 |
| Component^{©} | Organic colorant | Phthalocyanine Blue | 0.005 | 0.01 | 0.01 | 0.033 | 0.03 | - | 0.01 | - | - | - | 1.1 | - |
| | | Pigment Orange 34 | 0.005 | 0.01 | - | 0.033 | - | - | - | - | - | - | - | - |
| | | Pigment Yellow 55 | - | - | 0.01 | 0.033 | 0.03 | - | - | - | - | - | - | - |
| | Non-organic colorant | Carbon (MT grade) | - | - | - | - | - | - | - | 0.01 | - | - | - | - |
| | | Ferric oxide | - | - | - | - | - | - | - | - | 0.01 | - | - | - |
| Transmittance of 2mm rubber sheet | Maximum transmittance of 350-700nm wavelength (40% or less) | Maximum transmittance % (Wavelength nm) | 15.8 (549nm) | 3.7 (552nm) | 21.4 (528nm) | 24.0 (554nm) | 16.7 (528nm) | 76.1 (700nm) | 52.9 (490nm) | 24.7 (700nm) | 57.4 (700nm) | 0 (whole area) | 0 (whole area) | 0 (whole area) |
| | | Judgment | Passed | Passed | Passed | Passed | Passed | Failed | Failed | Passed | Failed | Passed | Passed | Passed |
| | Minimum transmittance of 800-1600nm wavelength (50% or more) | Minimum transmittance % (Wavelength nm) | 72.6 (800nm) | 66.7 (800nm) | 69.2 (800nm) | 75.2 (800nm) | 70.2 (800nm) | 79.1 (800nm) | 73.0 (800nm) | 24.8 (1 163nm) | 61.9 (800nm) | 0 (whole area) | 0 (whole area) | 0 (whole area) |
| | | Judgment | Passed | Passed | Passed | Passed | Passed | Passed | Passed | Failed | Passed | Failed | Failed | Failed |

| | | | | | | | | | | | | | | |
|---|---|---|---|---|---|---|---|---|---|---|---|---|---|---|
| Remarks · The transmittance of 2mm rubber sheet is as follows. In the column of "Maximum transmittance of 350-700nm wavelength", the highest transmittance (%) in the wavelength between 350 and 700nm and the wavelength (nm) at that time are described. In the column of "Minimum transmittance of 800-1600nm wavelength", the lowest transmittance (%) in the wavelength between 800 and 1600nm and the wavelength (nm) at that time are described. However, in each of the above-described columns, when the transmittance is less than 1%, it is described as 0. | | | | | | | | | | | | | | |

In Examples 1 and 2, a rubber composition was prepared by blending a peroxide-crosslinked fluororubber (FKM) with two kinds of organic colorants (Phthalocyanine Blue and Pigment Orange 34).

In Example 3, a rubber composition was prepared by blending a peroxide-crosslinked fluororubber (FKM) with two kinds of organic colorants (Phthalocyanine Blue and Pigment Yellow 55).

In Example 4, a rubber composition was prepared by blending a peroxide-crosslinked fluororubber (FKM) with three kinds of organic colorants (Phthalocyanine Blue, Pigment Orange 34, and Pigment Yellow 55).

In Example 5, a rubber composition was prepared by blending a peroxide-crosslinked ethylene propylene diene rubber (EPDM) with two kinds of organic colorants (Phthalocyanine Blue and Pigment Yellow 55).

In Comparative Example 1, a rubber composition was prepared without blending a colorant into a peroxide-crosslinked fluororubber (FKM).

In Comparative Examples 2 and 6, a rubber composition was prepared by blending a peroxide-crosslinked fluororubber (FKM) with one organic colorant (Phthalocyanine Blue).

In Comparative Example 3, a rubber composition was prepared by blending a peroxide-crosslinked fluororubber (FKM) with Carbon black (Carbon (MT grade)) as a non-organic colorant.

In Comparative Example 4, a rubber composition was prepared by blending a peroxide-crosslinked fluororubber (FKM) with ferric oxide as a non-organic colorant.

In Comparative Example 5, a rubber composition was prepared without blending a colorant into a fluororubber (FKM) differing from Comparative Example 1.

In Comparative Example 7, a rubber composition was prepared without blending a colorant into an acrylonitrile butadiene rubber (NBR).

For rubber sheets having a thickness of 2mm made from the rubber compositions of Examples 1 to 5 and Comparative Examples 1 to 7, the "maximum transmittance (%) in a wavelength of 350 to 700nm" and the "lowest transmittance (%) in a wavelength of 800 to 1600nm" were measured in the following manner. The results are shown in Table 1.

### [Maximum transmittance (%) of wavelength 350 to 700nm]

The transmittance (%) of the rubber sheet to be measured in a wavelength range of 350 to 1600nm was measured using UV-visible/NIR Spectrophotometer (UH4150 (trade name)) manufactured by Hitachi High-Tech Science Corporation. Then, the highest transmittance value (%) in the wavelength between 350 and 700nm and the wavelength (nm) at the value were obtained. The highest transmittance value (%) in the wavelength between 350 and 700nm is defined as "the maximum transmittance (%) in a wavelength of 350 to 700nm", and the transmittance (%) and the wavelength (nm) thereof are described in the column of "Maximum transmittance of 350-700nm wavelength" in Table 1. In addition, the maximum transmittance (%) in a wavelength of 350 to 700nm was evaluated based on the following evaluation criteria. Evaluation results are shown in Table 1.

### <Evaluation Criteria>

Evaluation "Passed": When the maximum transmittance in a wavelength of 350 to 700nm is 40% or less, it is considered to be passed.

Evaluation "Failed": When the maximum transmittance in a wavelength of 350 to 700nm exceeds 40%, it is considered to be failed.

### [Minimum transmittance (%) of wavelength 800 to 1600nm]

The transmittance (%) of the rubber sheet to be measured in a wavelength range of 350 to 1600nm was measured using UV-visible/NIR Spectrophotometer (UH4150 (trade name)) manufactured by Hitachi High-Tech Science Corporation. Then, the lowest transmittance value (%) in the wavelength between 800 and 1600nm and the wavelength (nm) at the value were obtained. The lowest transmittance value (%) in the wavelength between 800 and 1600nm is defined as "the minimum transmittance (%) in a wavelength of 800 to 1600nm", and the transmittance (%) and the wavelength (nm) thereof are described in the column of "Minimum transmittance of 800-1600nm wavelength" in Table 1. In addition, the minimum transmittance (%) in a wavelength of 800 to 1600nm was evaluated based on the following evaluation criteria. Evaluation results are shown in Table 1.

### <Evaluation Criteria>

Evaluation "Passed": When the minimum transmittance in a wavelength of 800 to 1600nm is 50% or more, it is considered to be passed.

Evaluation "Failed": When the minimum transmittance in a wavelength of 800 to 1600nm is less than 50%, it is considered to be failed.

### [Results]

As shown in Table 1, the rubber sheets made of the rubber compositions of Examples 1 to 5 had a maximum transmittance in a wavelength of 350 to 700nm of 40% and a minimum transmittance in a wavelength of 800 to 1600nm of 50% or more. Therefore, the rubber compositions of Examples 1 to 5 were capable of obtaining a rubber material that absorbs visible light, which is an obstacle to sensor and the like, in a wide range and selectively transmits infrared light. On the other hand, the rubber sheets made of the rubber compositions of Comparative Examples 1, 2, and 4 had a maximum transmittance in a wavelength of 350 to 700nm exceeding 40%, and the visible light shielding property was significantly low. In addition, the rubber sheets made of the rubber compositions of Comparative Examples 3 and 5 to 7 had a minimum transmittance in a wavelength of 800 to 1600nm of less than 50% and a low transmissivity to infrared light. In particular, the rubber sheets made of the rubber compositions of Comparative Examples 5 to 7 had a transmittance of less than 1% in the range of both the wavelength of 350 to 700nm and the wavelength of 800 to 1600nm, and absorbed light in a wide range from visible light to infrared light.

### Industrial applicability

The rubber composition of the present invention can be used as a rubber material that absorbs visible light, which is an obstacle to sensor and the like, in a wide range and selectively transmits infrared light.

## Claims

1. A rubber composition comprising (A) a polymer, (B) a crosslinking agent, and (C) a colorant, wherein the colorant (C) does not contain an inorganic black pigment, and a minimum transmittance in a wavelength of 800 to 1600nm is 50% or more and a maximum transmittance in a wavelength of 350 to 700nm is 40% or less in a rubber sheet having a thickness of 2mm.

2. The rubber composition according to claim 1, which contains two or more kinds of organic colorants for shielding visible light as the colorant (C).

3. The rubber composition according to claim 1 or 2, wherein the colorant (C) is 1 part by mass or less with respect to 100 parts by mass of the polymer (A).

4. The rubber composition according to any one of claims 1 to 3, which contains an organic peroxide as the crosslinking agent (B).

5. The rubber composition according to any one of claims 1 to 4, wherein the polymer (A) comprises at least one of a fluororubber and an ethylene propylene diene rubber.

6. The rubber composition according to any one of claims 1 to 5, wherein a minimum transmittance in a wavelength of 800 to 1600nm in a rubber sheet having a thickness of 2mm is 60% or more.

7. The rubber composition according to any one of claims 1 to 6, wherein a minimum transmittance in a wavelength of 900 to 1600nm in a rubber sheet having a thickness of 2mm is 50% or more.

8. The rubber composition according to any one of claims 1 to 7, which is used for a product using infrared light having a wavelength of 800 to 1600nm.

9. The rubber composition according to any one of claims 1 to 7, which is used for selective wavelength-absorption for LiDAR and a cover thereof.

10. The rubber composition according to any one of claims 1 to 7, which is used for an optical lens, an infrared camera lens, a lens for a biometric authentication camera, and covers thereof.

11. The rubber composition according to any one of claims 1 to 7, which is used for a biometric authentication device and a cover thereof.

12. The rubber composition according to any one of claims 1 to 7, which is used for an imaging device and a cover thereof.

13. The rubber composition according to any one of claims 1 to 7, which is used for a three-dimensional distance image camera and a cover thereof.
